# EUROPÄISCHE PATENTSCHRIFT

(11) **EP 2 645 898 B1**
(45) Veröffentlichungstag und Bekanntmachung des Hinweises auf die Patenterteilung: **07.01.2015**
(21) Anmeldenummer: 11782383.1
(22) Anmeldetag: 07.11.2011
(51) Int. Cl.: B29D 35/00, A43B 13/42, A43B 13/12, B29D 35/06

(54) **VERFAHREN ZUR HERSTELLUNG EINES SCHUHS**
METHOD FOR PRODUCING A SHOE
PROCÉDÉ DE FABRICATION D'UNE CHAUSSURE

(30) Priorität: 30.11.2010 DE 102010052783
(43) Veröffentlichungstag der Anmeldung: 09.10.2013
(73) Patentinhaber: PUMA SE, 91074 Herzogenaurach (DE)
(72) Erfinder: SUSSMANN, Reinhold, 91443 Scheinfeld (DE)
(74) Vertreter: Gosdin, Michael
(86) Internationale Anmeldenummer: PCT/EP2011/005580
(87) Internationale Veröffentlichungsnummer: WO 2012/072177

(56) Entgegenhaltungen:
- DE-B1- 2 603 716
- DE-T2- 69 503 139
- DE-T2- 69 615 274
- FR-A1- 2 315 236

## Beschreibung

Die Erfindung betrifft ein Verfahren zum Herstellen eines Schuhs, insbesondere eines Sportschuhs, mit einem Schuhoberteil und einer am Schuhoberteil angeordneten Zwischensohle, wobei der Schuh bei bestimmungsgemäßem Gebrauch einen oberen und einen unteren Bereich aufweist. Des weiteren betrifft die Erfindung einen Schuh.

Bei gattungsgemäßen Schuhen ergibt sich das äußere Erscheinungsbild des Schuhs durch das Schuhoberteil, an dessen unterem Bereich die Zwischensohle angeordnet ist; unterhalb der Zwischensohle ist wiederum die Außensohle angeordnet. Gattungsgemäße Schuhe mit Zwischensohlen haben daher im allgemeinen eine starke optische Trennung zwischen Schaft (Schuhoberteil) und Zwischensohle, hervorgerufen durch den oberen Rand der Zwischensohle. Auch bei gleicher Einfärbung von Zwischensohle und Schaft, hebt sich dieser Rand durch seine Materialstärke vom Schaft ab.

Da die Zwischensohle dem Fuß den wesentlichen Halt gibt, ist dessen Haltefunktion dann begrenzt, wenn sich die Zwischensohle nicht über eine gewisse Höhe erstrecken soll. Dies wird zumeist aus dem Grunde angestrebt, damit der Schuh nicht schwer wirkt, was der Fall ist, wenn die Zwischensohle hoch reicht.

Zur Herstellung der Verbindung zwischen Schuhoberteil und Zwischensohle sind zumeist spezielle Verbindungsverfahren erforderlich, die entsprechend kostenintensiv sind. Das Verkleben von Zwischensohle und Schuhoberteil stellt also einen sehr arbeitsintensiven Prozess dar, der im übrigen eine Vielzahl von Einzelschritten umfasst und einen relativ hohen Energieaufwand erfordert.

Hohe Zwischensohlen ergeben sich zumeist aber bei der Verwendung anatomisch geformter Leisten. Vor allem im Fersenbereich braucht man eine gewisse Höhe, um die runde Ferse ganz zu fassen. Diese Höhe ist - wie gesagt - allerdings mitunter negativ und erweckt den Eindruck eines hohen Gewichts und ungünstig großer Hebelverhältnisse beim Auftreffen des Fußes, insbesondere der Ferse, auf dem Boden; dies gilt insbesondere im Falle von Running-Schuhen.

Aus der DE 695 03 139 T2 ist ein Verfahren zur Herstellung eines Schuhs bekannt, bei dem zunächst ein Schuhschaft an einer Außensohle befestigt wird. Die Oberfläche der Außensohle weist an der dem Inneren des Schuhs zugewandten Seite einen Hohlraum auf. Dieser wird durch Einspritzen von Kunststoffmaterial durch die Außensohle hindurch ausgefüllt, um so eine Zwischensohle zu bilden. Das Problem bleibt hier allerdings erhalten, dass die Höhe der Zwischensohle auf den Sohlenbereich beschränkt ist, d. h. die Zwischensohle erstreckt sich nicht wesentlich über die Höhe der Außensohle hinaus. Eine weitere ähnliche Lösung zeigt die DE 696 15 274 T2**.**

In der DE 26 03 716 B1 wird ebenfalls ein Hohlraum, der zwischen einer Innensohle und einer Laufsohle gebildet wird, mit einer Kunststoffmasse ausgespritzt, so dass die Kunststoffmasse eine Zwischensohle bildet. Die im Zusammenhang mit der DE 695 03 139 T2 genannte Problematik bleibt aber auch hier erhalten.

Weitere Lösungen zeigen die DE 696 15 274 T2 und die FR 2 315 236 A1**.**

Der Erfindung liegt die **Aufgabe** zugrunde, ein Verfahren der eingangs genannten Art vorzuschlagen und einen entsprechenden Schuh bereitzustellen, mit dem es möglich ist, die genannten Probleme zu überwinden. Demgemäß soll der Schuh eine im Seitenbereich hoch reichende Zwischensohle haben, die dem Fuß einen guten Halt gibt. Dennoch soll der Schuh ein ansprechendes äußeres Erscheinungsbild haben. Weiterhin soll das Verfahren eine wirtschaftliche Schuhherstellung ermöglichen.

Die **Lösung** dieser Aufgabe durch die Erfindung ist dadurch gekennzeichnet, dass das Verfahren die Schritte aufweist:
a) Herstellen des Schuhoberteils des Schuhs, wobei an der Unterseite des Schuhoberteils eine Aufnahmetasche angeordnet wird, die einen zumindest weitgehend geschlossenen Aufnahmeraum für das Material der Zwischensohle bildet, wobei die Aufnahmetasche aus einem dünnen, elastischen Material besteht;
b) Platzieren des Schuhoberteils samt Aufnahmetasche in einem Gießwerkzeug;
c) Eingießen oder Einspritzen von fließfähigem Kunststoffmaterial in den Aufnahmeraum der Aufnahmetasche, um die Zwischensohle auszubilden, wobei sich die Aufnahmetasche ballonartig im Volumen vergrößert;
d) Aushärtenlassen des eingegossenen oder eingespritzten Kunststoffmaterials;
e) Entformen des Schuhoberteils samt Aufnahmetasche und gegossener oder gespritzter Zwischensohle aus dem Gießwerkzeug.

Bei der Durchführung des Schritts c) wird der Aufnahmeraum der Aufnahmetasche im unteren Bereich des Schuhoberteils, der unmittelbar oberhalb der Zwischensohle liegt, bevorzugt durch ein Werkzeugteil begrenzt. Hierbei ist insbesondere an ein Werkzeugteil gedacht, das als Schuhleisten geformt ist.

Nach der Durchführung des Schritts e) kann unter der Aufnahmetasche (und somit unter der gegossenen bzw. gespritzten Zwischensohle, eine Außensohle angeordnet werden. Diese kann beispielsweise angeklebt oder angespritzt werden.

Eine alternative Lösung sieht vor, dass die Aufnahmetasche vor der Durchführung des obigen Schritts a) an ihrer Außenseite mit mindestens einem Außensohlenelement versehen wird. Das mindestens eine Außensohlenelement kann dabei aus dem Material der Aufnahmetasche ausgebildet, insbesondere ausgeformt, werden.

Bei der Durchführung des Schritts a) wird die Aufnahmetasche bevorzugt an dem Schuhoberteil angenäht.

Bei der Durchführung des Schritts c) wird bevorzugt ein schäumbares Kunststoffmaterial verwendet, insbesondere ein schäumbares Polyurethanmaterial.

Bei der Durchführung des Schritts c) ist gemäß einer bevorzugten Ausgestaltung der Erfindung vorgesehen, dass das fließfähige Kunststoffmaterial durch das Werkzeugteil, insbesondere in Schuhleistenform, eingegossen oder eingespritzt wird, das den Aufnahmeraum der Aufnahmetasche im unteren Bereich des Schuhoberteils unmittelbar oberhalb der Zwischensohle begrenzt.

Der vorgeschlagene Schuh, insbesondere ausgeführt als Sportschuh, ist erfindungsgemäß dadurch gekennzeichnet, dass an der Unterseite des Schuhoberteils eine aus einem dünnen, elastischen Material bestehende Aufnahmetasche angeordnet ist, die einen zumindest weitgehend geschlossenen Aufnahmeraum für das Material der Zwischensohle aufweist, wobei der Aufnahmeraum mit die Zwischensohle bildendem Kunststoffmaterial ausgefüllt ist.

Die Aufnahmetasche ist dabei bevorzugt am Schuhoberteil festgenäht.

Die Aufnahmetasche besteht bevorzugt aus einem Material, das eine hohe Abriebsfestigkeit aufweist. Durch die Elastizität des Materials kann sich die Aufnahmetasche ausdehnen.

Die Aufnahmetasche kann ferner an ihrer Außenseite mit mindestens einem Außensohlenelement versehen sein. In diesem Falle ist also die Aufnahmetasche bereits so ausgebildet, dass sie nach dem Einspritzen des Materials der Zwischensohle als Außensohle fungiert. Dann muss nicht unbedingt nachfolgend eine Außensohle an der mit dem Material der Zwischensohle ausgefüllten Aufnahmetasche angeordnet werden. Das mindestens eine Außensohlenelement kann dabei aus dem Material der Aufnahmetasche ausgebildet, insbesondere ausgeformt, sein.

Die Aufnahmetasche muss nicht aus einem flächigen Teil ausgebildet werden, es ist auch möglich, dass sie aus mehreren miteinander verbundenen, insbesondere miteinander vernähten, Abschnitten besteht.

Eine andere Möglichkeit stellt darauf ab, dass die Aufnahmetasche als Vorformling gefertigt und eingesetzt wird. Hiernach ist die Aufnahmetasche bevorzugt gespritzt und/oder tiefgezogen. Die Dimensionen der Aufnahmetasche sind dabei bevorzugt geringfügig kleiner als die gemäß der angestrebten Endform im Schuh. Hierdurch können Falten bei der Herstellung vermieden werden. Eine vorteilhafte Möglichkeit beim Einsatz einer vorgeformten Aufnahmetasche ist es weiter, dass es hierbei möglich ist, an die Aufnahmetasche bereits eine Profilierung mit anzuformen, insbesondere die Außensohle, wodurch sich ein späterer Klebeprozess (Aufkleben der Laufsohle) vermeiden lässt.

Um den Fuß des Trägers des Schuhs einen besonders guten Halt zu geben, sieht eine weitere bevorzugte Ausführungsform der Erfindung vor, dass sich das die Zwischensohle bildende Kunststoffmaterial im Seitenbereich des Schuhs über die Oberfläche der Zwischensohle in der Schuhmitte um einen Betrag hinaus erstreckt, der mindestens 20 % der Höhe der Zwischensohle in der Schuhmitte beträgt, bevorzugt mindestens 30 % der Höhe der Zwischensohle in der Schuhmitte.

Gemäß dem vorgeschlagenen Vorgehen ist ein Schuhoberteil, d. h. ein Schuhschaft (gezwickt, gestrobelt oder als Vollmokassin konzipiert) vorgesehen, wobei am Schuhoberteil unten eine Aufnahmetasche (Sack, Beutel) angenäht ist, der aus einem dehnbaren Material besteht. Die Zwischensohle ist nicht wie üblich vorgeformt und dann mit dem Schuhoberteil verklebt, sondern die Zwischensohle wird direkt am Schuhoberteil mittels der Aufnahmetasche ausgebildet.

Demgemäß wird die insbesondere sackartig bzw. beutelartig ausgebildete Aufnahmetasche aus elastischem Material zunächst am Schuhoberteil befestigt, insbesondere angenäht, wobei erst durch das Eingießen oder Einspritzen von fließfähigem Kunststoffmaterial die Form der Zwischensohle gebildet wird, indem sich nämlich die Aufnahmetasche ballonartig im Volumen vergrößert und an die Kavitätswände des Gießwerkzeugs anlegt.

Über eine Öffnung in der Aufnahmetasche und/oder über ein Werkzeugteil wird eine vorbestimmte Menge an vorzugsweise flüssigem Polyurethan (zwei-Komponenten PU) eingefüllt, welche nach kurzer Zeit aufschäumt und den Zwischensohlen-Aufnahmetasche ausfüllt. Um eine geregelte Expansion bzw. ein gewünschtes Design zu erhalten, wird die Expansion des Polyurethanschaums durch ein Gießwerkzeug begrenzt.

Mit dieser Vorgehensweise ergeben sich verschiedene Vorteile:
Zunächst ist es sehr vorteilhaft, dass es keinen sichtbaren Übergang zwischen dem Schuhoberteil (Schaft) und der Zwischensohle gibt. Der optische Übergang wird vielmehr durch die Verbindungsnaht zwischen Schuhoberteil und Aufnahmetasche definiert, deren Lage weitgehend frei wählbar ist.

Dann ist es sehr vorteilhaft, dass kein separater Verbindungsprozess zwischen Schuhoberteil und Zwischensohle (d. h. insbesondere kein Verklebungsprozess) mehr erforderlich ist, d. h. es ist kein Klebstoff notwendig und es werden sehr viele und zum Teil sehr energieaufwändige Prozesse (Zwicken, Rauen, UV-Behandlung der Zwischensohle, Trocknen des Klebstoffes, Anpressen der Sohle, etc.) eingespart. Dies führt zu entsprechenden ökonomischen und ökologischen Vorteilen.

Das aufschäumende Polyurethanmaterial dichtet den Schaft automatisch und vollständig gegen den Boden ab. Dies erlaubt in sehr kostengünstiger Weise die Herstellung eines wasserdichten Schuhs, wenn wasserdichte Membrane (z. B "Goretex") eingesetzt werden.

Auf Grund der fehlenden Verklebung zwischen Schuhoberteil und Zwischensohle erhält man weiterhin vorteilhaft sehr flexible und weiche Schuhe.

Unebenheiten am Schaftboden, welche durch das Zwicken bzw. Strobeln des Schaftes hervorgerufen werden, werden in vorteilhafter Weise eliminiert. Dies führt zu einem erhöhten Tragekomfort des Schuhs.

Der Schaftboden (z. B Strobelsohle oder Mokassin) kann gleichzeitig die Einlegesohle bilden.

Da bevorzugt ein schuhleistenförmiges Werkzeugteil bei der Ausbildung der Oberseite der Zwischensohle eingesetzt wird, wird ein durch den Leisten definiertes anatomisches Fußbett vorgegeben; beim Aufschäumen des Polyurethanmaterials wird also die Zwischensohle optimal ausgeformt.

Das für das vorgeschlagene Verfahren benötigte Polyurethan-Material kann sich in seinen mechanischen und chemischen Eigenschaften von den sonst üblicherweise benutzten Systemen unterscheiden, da z. B. kein Vergilbungsschutz erforderlich ist und auch die mechanischen Eigenschaften z. B. hinsichtlich der Weiterreißfestigkeit nicht die sonst benötigte Qualität erfordern. Dies erlaubt an dieser Stelle Kosteneinsparungen.

In der Zeichnung ist ein Ausführungsbeispiel der Erfindung dargestellt. Es zeigen:
- Fig. 1: einen fertigen Schuh in der Seitenansicht,
- Fig. 2: in der Seitenansicht ein Schuhoberteil mit an der Unterseite angebrachter, noch leerer Aufnahmetasche,
- Fig. 3: in der Seitenansicht ein Spritzgießwerkzeug, in das das Schuhoberteil samt noch leerer Aufnahmetasche gemäß Fig. 2 eingelegt ist, vor dem Einspritzen von Material für die Zwischensohle,
- Fig. 4: in der Darstellung gemäß Fig. 3 das Spritzgießwerkzeug, wobei jetzt das Material für die Zwischensohle eingespritzt ist, und
- Fig. 5: den Schnitt C-D durch das Spritzgießwerkzeug gemäß Fig. 4.

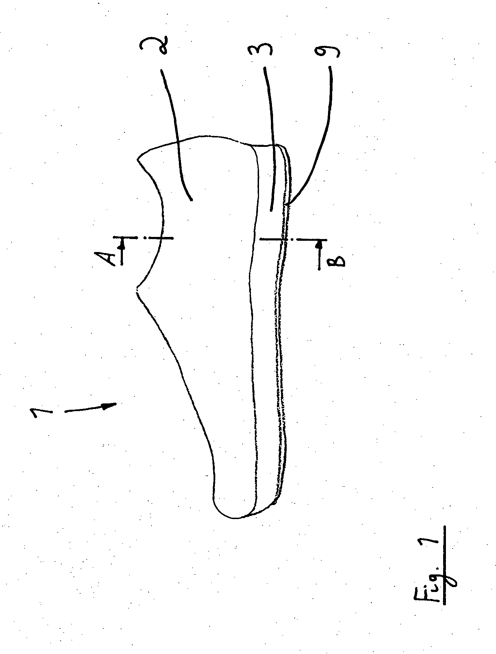

In Fig. 1 ist der herzustellende Schuh 1 in Form eines Sportschuhs dargestellt. Der Schuh 1 hat ein Schuhoberteil (Schaft) 2, an dessen Unterseite eine Zwischensohle 3 angeordnet ist. An der Unterseite der Zwischensohle 3 ist wiederum eine Außensohle 9 angeordnet.

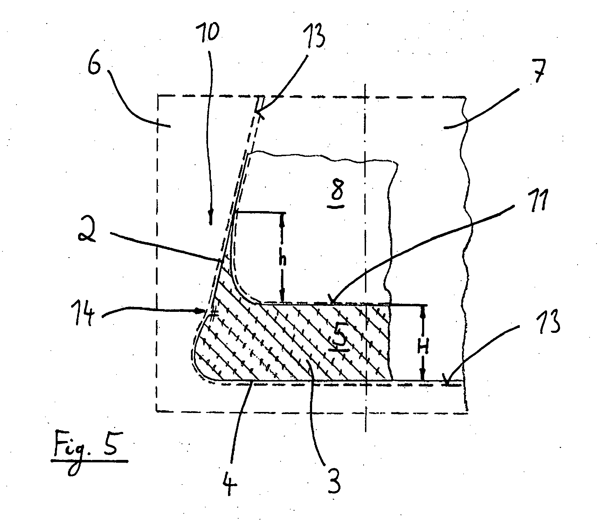

Der Schnitt A-B gemäß Fig. 1 durch den Schuh 1 entspricht der Darstellung, wie sie in Fig. 5 zu sehen ist.

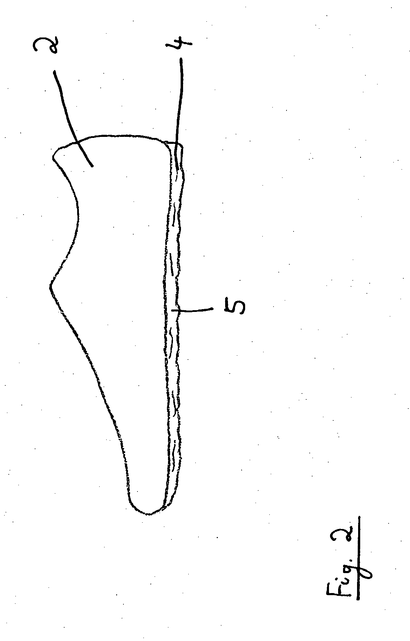

Die Herstellung des Schuhs gemäß Fig. 1 erfolgt wie folgt:
In einem ersten Schritt wird - wie es in Fig. 2 skizziert ist - an das weitgehend fertiggestellte Schuhoberteil 2 an dessen Unterseite eine Aufnahmetasche 4 angenäht. Die Aufnahmetasche besteht aus einem dünnen und dehnfähigen Material. Mit der Aufnahmetasche 4 wird das Schuhoberteil 2 an der Unterseite weitgehend abgeschlossen, d. h. die Aufnahmetasche 4 bildet eine Art Beutel, der das Schuhoberteil an der Unterseite vollständig abschließt. Die Aufnahmetasche 4 bildet einen Aufnahmeraum 5 für das Material der Zwischensohle 3 des Schuhs.

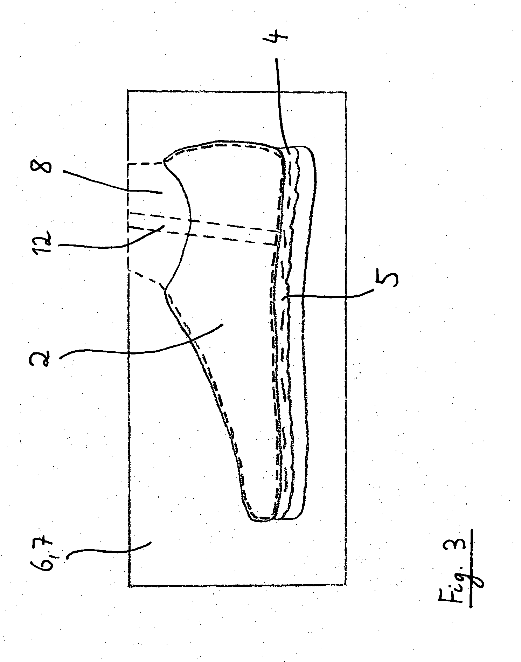

Das vorbereitete Schuhoberteil 2 samt Aufnahmetasche 4 wird nun - gemäß Fig. 3 - in ein dreiteiliges Spritzgießwerkzeug eingelegt. Das Spritzgießwerkzeug besteht zunächst aus zwei Formhälften 6 und 7 (s. hierzu Fig. 5), die in üblicher Weise eine Formkavität bilden, die der Form des fertigen Schuhs entspricht.

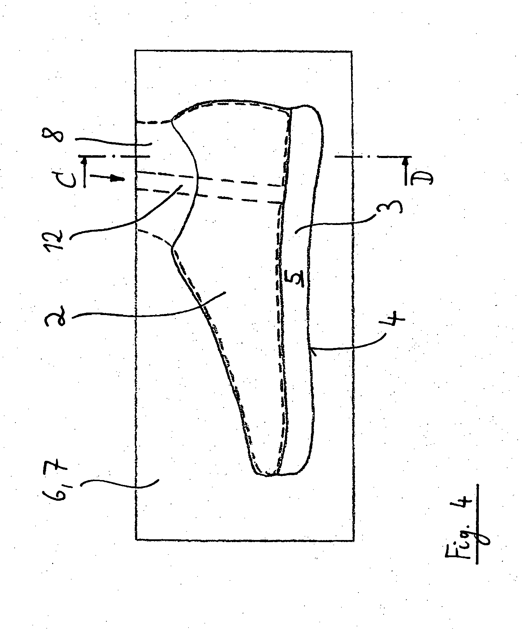

Als drittes Werkzeugteil ist ein Teil 8 in Form eines Schuhleistens vorgesehen, auf das das Schuhoberteil 2 aufgezogen ist. In Fig. 3 und Fig. 4 ist dieses Teil 8 mit gestrichelter Linie dargestellt.

Nunmehr wird - gemäß Fig. 4 - zur Herstellung der Zwischensohle 3 über einen Anguss 12 in Richtung des Pfeils schäumbare Polyurethanschmelze in den Aufnahmeraum 5 der Aufnahmetasche 4 injiziert. Der Aufnahmeraum 5 füllt sich infolge des Aufschäumens des Polyurethanmaterials mit dem Material der Zwischensohle 3, bis die Aufnahmetasche 4 an der Wandung der Kavität der Spritzgießform anliegt, die durch die beiden Werkzeugteile 6 und 7 gebildet wird. Gleichzeitig legt sich das Material gegen das leistenförmige Werkzeugteil 8 an.

Der sich ergebende Schuh ist in Fig. 5 im Schnitt C-D gemäß Fig. 4 skizziert; dieser Schnitt durch den Schuh entspricht auch dem Schnitt A-B gemäß Fig. 1.

Demnach hat sich das Material der Zwischensohle 3 durch Füllung des Aufnahmeraums 5 so ausgedehnt, dass der Raum vollständig mit Polyurethanmaterial ausgefüllt ist, der zwischen der Wandung 13 des Werkzeugs und dem leistenförmigen Werkzeugteil 8 verbleibt. Dies hat zur Folge, dass es konstruktiv problemlos möglich ist, das Material der Zwischensohle 3 im Seitenbereich 10 des Schuhs über die Oberfläche 11 der Zwischensohle 3 in der Schuhmitte ansteigen zu lassen. In Fig. 5 ist hierzu zu sehen, dass sich im Seitenbereich 10 die Zwischensohle 3 bis in eine Höhe erstreckt, die um den Betrag h höher liegt als die Oberfläche 11 der Zwischensohle 3 in der Schuhmitte.

Zur Größenordnung dieses Betrages h ist zu sagen, dass er zumeist mindestens 20 % der Höhe H der Zwischensohle in der Schuhmitte entspricht.

Der hiermit erreichbare Effekt ist in Fig. 5 gut zu erkennen: Da die Aufnahmetasche 4 am Schuhoberteil 2 mit einer Naht 14 angenäht ist, ergibt sich als optisch sichtbare und damit scheinbare Grenzlinie zwischen Schuhoberteil 2 und Zwischensohle 3 die Höhenlage der Naht 14. Der Schuh erhält ein schlankes und leichtes Aussehen.

Wie anhand des Schnitts gemäß Fig. 5 zu sehen ist, erstreckt sich die Zwischensohle tatsächlich aber um den Betrag h über die Oberfläche 11 der Zwischensohle im Bereich der Schuhmitte.

Demgemäß kann eine sehr viel bessere Stütze für den Fuß des Trägers des Schuhs erreicht werden, als es dem scheinbaren Aussehen des Schuhs entspricht.

Die Aufnahmetasche 5 besteht ganz oder teilweise aus einem dünnen und sehr dehnfähigen Material, das sich mit Polyurethan (Material der Zwischensohle) verbindet; nach außen weist es eine hohe mechanische Belastbarkeit auf, insbesondere hinsichtlich des Abriebs und der Haftung der Oberfläche.

Der verwendete Polyurethanschaum hat eine Dichte von 0,24 bis 0,5 g/cm³.

Beschrieben ist das Einfüllen des Polyurethans für die Zwischensohle durch das leistenförmige Teil 8 des Gießwerkzeugs, d. h. durch den Anguss 12. Möglich ist aber alternativ oder additiv auch das Eingießen bzw. Einspritzen des PU-Materials über den Bodenbereich.

Die Außensohle 9 (Laufsohle) wird separat nach der Entformung des vorgefertigten Teils aus dem Spritzgießwerkzeug angeklebt oder in einem weiteren Prozess direkt angegossen bzw. angespritzt.

Die Nähte des Schaftes, die mit dem Polyurethanmaterial in Berührung kommen, sowie die textilen Materialien sind vorzugsweise abgedichtet, um einen Austritt des noch nicht ausgehärteten Polyurethans zu verhindern.

Eine bevorzugte Vorgehensweise des erfindungsgemäßen Verfahrens sieht vor, dass der fertige Schaft 2 (incl. Zwischensohlenbeutel 4) auf das leistenartige Werkzeugteil 8 aufgezogen wird, der auf eine Bodenplatte des Spritzgießwerkzeugs lösbar aufgesteckt wird. Die lösbare Anordnung wird deshalb gewählt, weil dann während der Produktion in einem parallelen Arbeitsgang bereits entsprechend Schuhoberteile 2 aufgeleistet werden können.

Das Spritzgießwerkzeug mit seinen beiden Werkzeughälften 6 und 7 wird dann geschlossen, wobei die Formenhälften 6, 7 die Ausdehnung des PU-Schaums in alle Richtungen begrenzen. Über einen Einguss, der aus einer verschließbaren Aussparung in der Form herausragt, kann eine bestimmte Menge an Polyurethan in den Beutel 4 eingegossen werden. Das Füllen des Beutels 4 kann allerdings auch - wie oben erläutert - über den Anguss 12 im leistenförmigen Werkzeugteil 8 erfolgen. Der Angusskanal wird dann verschlossen, um ein Ausfließen des expandierenden PU-Schaums zu vermeiden. Das Polyurethan expandiert dann und reagiert innerhalb einer bestimmten Zeit aus. Die Form wird dann geöffnet und das Schuhoberteils samt Zwischensohle 3 und Aufnahmetasche 4 vom Leisten 8 abgezogen.

Durch das wahlweise Ausdehnen des Materials der Zwischensohle ist es möglich, auch im Fersenbereich das Material sich so ausdehnen zu lassen, dass Hinterkappen (Fersenkappen) nicht separat angeformt werden müssen.

Im Ausführungsbeispiel wurde nach dem Ausfüllen der Aufnahmetasche 4 mit dem Material der Zwischensohle 3 an der Unterseite der Aufnahmetasche 4 die Außensohle 9 angebracht. Dies ist aber nicht zwingend nötig. Eine alternative Möglichkeit sieht vor, dass die Aufnahmetasche 4 selber nach ihrem Ausfüllen mit dem Material der Zwischensohle 3 als Außensohle fungiert, wobei sich ein abriebsfestes Material für die Aufnahmetasche 4 empfiehlt. Dabei kann die Aufnahmetasche 4 beispielsweise mit einer Anzahl von Noppen versehen werden, die aus dem Material der Aufnahmetasche 4 ausgeformt sind. Es ist aber auch möglich, dass die Außensohlenelemente auf die Oberfläche der Aufnahmetasche 4 aufgebracht, insbesondere aufgespritzt, sind.

Ferner kann die Aufnahmetasche aus mehreren streifenförmigen Bahnen zusammengesetzt sein, wobei diese Bahnen miteinander vernäht werden können. Hierdurch ist es möglich, der äußeren Gestalt des Schuhs eine gewünschte Erscheinung zu verleihen, während - wie erläutert - im Inneren des Schuhs die Zwischensohle relativ weit hochgezogen wird (s. Fig. 5).

### Bezugszeichenliste:

- 1: Schuh
- 2: Schuhoberteil
- 3: Zwischensohle
- 4: Aufnahmetasche
- 5: Aufnahmeraum
- 6, 7, 8: Gießwerkzeug
- 6: Werkzeugteil
- 7: Werkzeugteil
- 8: Werkzeugteil (Leistenteil)
- 9: Außensohle
- 10: Seitenbereich
- 11: Oberfläche der Zwischensohle
- 12: Anguss
- 13: Wandung der Kavität
- 14: Naht

- h: Betrag der Erstreckung
- H: Höhe der Zwischensohle

## Patentansprüche

1. Verfahren zum Herstellen eines Schuhs (1), insbesondere eines Sportschuhs, mit einem Schuhoberteil (2) und einer am Schuhoberteil (2) angeordneten Zwischensohle (3), wobei der Schuh bei bestimmungsgemäßem Gebrauch einen oberen und einen unteren Bereich aufweist,
**dadurch gekennzeichnet, dass**
das Verfahren die Schritte aufweist:
a) Herstellen des Schuhoberteils (2) des Schuhs (1), wobei an der Unterseite des Schuhoberteils (2) eine Aufnahmetasche (4) angeordnet wird, die einen zumindest weitgehend geschlossenen Aufnahmeraum (5) für das Material der Zwischensohle (3) bildet, wobei die Aufnahmetasche (4) aus einem dünnen, elastischen Material besteht;
b) Platzieren des Schuhoberteils (2) samt Aufnahmetasche (4) in einem Gießwerkzeug (6, 7, 8);
c) Eingießen oder Einspritzen von fließfähigem Kunststoffmaterial in den Aufnahmeraum (5) der Aufnahmetasche (4), um die Zwischensohle (3) auszubilden, wobei sich die Aufnahmetasche (4) ballonartig im Volumen vergrößert;
d) Aushärtenlassen des eingegossenen oder eingespritzten Kunststoffmaterials;
e) Entformen des Schuhoberteils (2) samt Aufnahmetasche (4) und gegossener oder gespritzter Zwischensohle (3) aus dem Gießwerkzeug (6, 7, 8).

2. Verfahren nach Anspruch 1, **dadurch gekennzeichnet, dass** bei der Durchführung des Schritts c) gemäß Anspruch 1 der Aufnahmeraum (5) der Aufnahmetasche (4) im unteren Bereich des Schuhoberteils (2), der unmittelbar oberhalb der Zwischensohle (3) liegt, durch ein Werkzeugteil (8) begrenzt wird, insbesondere durch ein Werkzeugteil (8) in Schuhleistenform.

3. Verfahren nach Anspruch 1 oder 2, **dadurch gekennzeichnet, dass** nach der Durchführung des Schritts e) gemäß Anspruch 1 unter der Aufnahmetasche (4) eine Außensohle (9) angeordnet, insbesondere angeklebt oder angespritzt, wird.

4. Verfahren nach Anspruch 1 oder 2, **dadurch gekennzeichnet, dass** die Aufnahmetasche (4) vor der Durchführung des Schritts a) gemäß Anspruch 1 an ihrer Außenseite mit mindestens einem Außensohlenelement versehen wird.

5. Verfahren nach Anspruch 4, **dadurch gekennzeichnet, dass** das mindestens eine Außensohlenelement aus dem Material der Aufnahmetasche (4) ausgebildet, insbesondere ausgeformt, wird.

6. Verfahren nach einem der Ansprüche 1 bis 5, **dadurch gekennzeichnet, dass** bei der Durchführung des Schritts a) gemäß Anspruch 1 die Aufnahmetasche (4) an dem Schuhoberteil (2) angenäht wird.

7. Verfahren nach einem der Ansprüche 1 bis 6, **dadurch gekennzeichnet, dass** bei der Durchführung des Schritts c) gemäß Anspruch 1 ein schäumbares Kunststoffmaterial verwendet wird, insbesondere ein schäumbares Polyurethanmaterial.

8. Verfahren nach einem der Ansprüche 2 bis 7, **dadurch gekennzeichnet, dass** bei der Durchführung des Schritts c) gemäß Anspruch 1 das fließfähige Kunststoffmaterial durch das Werkzeugteil (8), insbesondere in Schuhleistenform, eingegossen oder eingespritzt wird, das den Aufnahmeraum (5) der Aufnahmetasche (4) im unteren Bereich des Schuhoberteils (2) unmittelbar oberhalb der Zwischensohle (3) begrenzt.

## Claims

1. Method for the production of a shoe (1), especially of a sport shoe, with a shoe upper (2) and a midsole (3) which is arranged at the shoe upper, wherein the shoe comprises an upper region and a bottom region during intended use,
**characterized in that**
the method comprises the steps:
a) Production of the shoe upper (2) of the shoe (1), wherein a receiving pocket (4) is arranged at the bottom side of the shoe upper (2), which receiving pocket (4) forms a receiving space (5) for the material of the midsole (3) which receiving space (5) is at least substantially closed, wherein the receiving pocket (4) consists of a thin, elastic material;
b) Placement of the shoe upper (2) including the receiving pocket (4) in a moulding tool (6, 7, 8);
c) Pouring or injecting of flowable plastic material into the receiving space (5) of the receiving pocket (4) to form the midsole (3), wherein the receiving pocket (4) increases its volume balloon-like;
d) Letting solidify of the poured or injected plastic material;
e) Demoulding of the shoe upper (2) including receiving pocket (4) and poured or injected midsole (3) from the moulding tool (6, 7, 8).

2. Method according to claim 1, **characterized in that** during execution of step c) according to claim 1 the receiving space (5) of the receiving pocket (4) is delimited by a tool part (8) in the bottom region of the shoe upper (2), which bottom region is arranged directly above the midsole (3), especially by a tool part (8) in the form of a shoe last.

3. Method according to claim 1 or 2, **characterized in that** after the execution of step e) according to claim 1 an outer sole (9) is arranged, especially glued or injection moulded, below the receiving pocket (4).

4. Method according to claim 1 or 2, **characterized in that** at the outer face of the receiving pocket (4) at least one outer sole element will be added before the execution of step a) according to claim 1.

5. Method according to claim 4, **characterized in that** the at least one outer sole element will be formed, particularly be molded, out of the material of the receiving pocket (4).

6. Method according to one of claims 1 to 5, **characterized in that** at the execution of step a) according to claim 1 the receiving pocket (4) will be sewed on the shoe upper (2).

7. Method according to one of claims 1 to 6, **characterized in that** during the execution of step c) according to claim 1 a foamable plastic material will be used, particularly a foamable polyurethane material.

8. Method according to one of claims 2 to 7, **characterized in that** during the execution of step c) according to claim 1, the flowable plastic material will be poured or injected through the tool part (8), particularly in form of a shoe last, which limits the receiving space (5) of the receiving pocket (4) in the lower part of the shoe upper (2), immediate above the midsole (3).

## Revendications

1. Procédé de fabrication d'une chaussure (1), en particulier d'une chaussure de sport, comprenant une partie supérieure de chaussure (2) et une semelle intermédiaire (3) disposé contre la partie supérieure de chaussure (2), la chaussure présentant, lorsqu'elle est utilisée correctement, une région supérieure et une région inférieure,
**caractérisé en ce que**
le procédé présente les étapes suivantes :
a) fabrication de la partie supérieure de chaussure (2) de la chaussure (1), une cavité de réception (4) étant disposée au niveau du côté inférieur de la partie supérieure de chaussure (2), laquelle cavité de réception forme un espace de réception au moins essentiellement fermé (5) pour le matériau de la semelle intermédiaire (3), la cavité de réception (4) se composant d'un matériau élastique mince ;
b) positionnement de la partie supérieure de chaussure (2) conjointement avec la cavité de réception (4) dans un outil de moulage (6, 7, 8) ;
c) coulage ou injection de matériau en plastique apte à s'écouler dans l'espace de réception (5) de la cavité de réception (4) afin de constituer la semelle intermédiaire (3), la cavité de réception (4) augmentant de volume à la manière d'un ballon ;
d) durcissement du matériau en plastique coulé ou injecté ;
e) démoulage de la partie supérieure de chaussure (2) conjointement avec la cavité de réception (4) et de la semelle intermédiaire coulée ou injectée (3) hors de l'outil de moulage (6, 7, 8).

2. Procédé selon la revendication 1, **caractérisé en ce que** lors de la mise en oeuvre de l'étape c) selon la revendication 1, l'espace de réception (5) de la cavité de réception (4) est limité, dans la région inférieure de la partie supérieure de chaussure (2) qui est située directement au-dessus de la semelle intermédiaire (3), par une pièce d'outil (8), notamment par une pièce d'outil (8) en forme de forme de chaussure.

3. Procédé selon la revendication 1 ou 2, **caractérisé en ce qu'**après la mise en oeuvre de l'étape e) selon la revendication 1, une semelle extérieure (9) est disposée, notamment est collée ou pulvérisée en dessous de la cavité de réception (4).

4. Procédé selon la revendication 1 ou 2, **caractérisé en ce que** la cavité de réception (4), avant la mise en oeuvre de l'étape a) selon la revendication 1, est pourvue au niveau de son côté extérieur d'au moins un élément de semelle extérieure.

5. Procédé selon la revendication 4, **caractérisé en ce que** l'au moins un élément de semelle extérieure est réalisé, notamment formé, à partir du matériau de la cavité de réception (4).

6. Procédé selon l'une quelconque des revendications 1 à 5, **caractérisé en ce que** lors de la mise en oeuvre de l'étape c) selon la revendication 1, la cavité de réception (4) est cousue à la partie supérieure de chaussure (2).

7. Procédé selon l'une quelconque des revendications 1 à 6, **caractérisé en ce que** lors de la mise en oeuvre de l'étape c) selon la revendication 1, un matériau en plastique apte à être moussé est utilisé, en particulier un matériau en polyuréthane apte à être moussé.

8. Procédé selon l'une quelconque des revendications 2 à 7, **caractérisé en ce que** lors de la mise en oeuvre de l'étape c) selon la revendication 1, le matériau en plastique apte à s'écouler est coulé ou injecté par la pièce d'outil (8), en particulier en forme de forme de chaussure, qui limite l'espace de réception (5) de la cavité de réception (4) dans la région inférieure de la partie supérieure de chaussure (2) directement au-dessus de la semelle intermédiaire (3).
